# EUROPÄISCHE PATENTSCHRIFT

(11) **EP 0 750 960 B1**
(45) Veröffentlichungstag und Bekanntmachung des Hinweises auf die Patenterteilung: **04.08.1999**
(21) Anmeldenummer: 96109457.0
(22) Anmeldetag: 13.06.1996
(51) Int. Cl.: B23B 51/04

(54) **Bohrwerkzeug, insbesondere für metallische Werkstoffe**
Drill, particularly for metallic materials
Foret, en particulier pour matériaux métalliques

(30) Priorität: 26.06.1995 US 494444
(43) Veröffentlichungstag der Anmeldung: 02.01.1997
(73) Patentinhaber: WALTER AG, 72072 Tübingen (DE)
(72) Erfinder: Fauser, Lothar, 72147 Nehren (DE); Bohnet, Siegfried, 72116 Mössingen (DE); Ebenhoch, Sebastian, Sussex WI 53089 (US)
(74) Vertreter: Patentanwälte Rüger, Barthelt & Abel

(56) Entgegenhaltungen:
- EP-A- 0 613 746
- DE-A- 3 545 586
- US-A- 3 966 349
- US-A- 4 563 113
- US-A- 5 049 011

## Beschreibung

Die Erfindung betrifft ein Bohrwerkzeug, insbesondere für metallische Werkstoffe, mit einem im wesentlichen zylindrischen Bohrerkörper, gemäß dem Oberbegriff des Patentanspruchs 1.

Ein solches Bohrwerkzeug mit zwei Spanräumen ist beispielsweise in der US-PS 5 049 011 der Anmelderin beschrieben. Bei diesem Bohrwerkzeug sind die Schneidelemente in im Bereiche der beiden Spanräume am schneidenseitigen Ende des Bohrerkörpers ausgebildeten Sitzen aufgenommen. Sie sind als Wendeschneidplatten mit einem durchgehenden Befestigungsloch ausgebildet und mittels einer Spannschraube an dem Bohrerkörper lösbar befestigt. Eines der Schneidelemente ist radial außen liegend so angeordnet, daß es mit einer an eine Hauptschneidkante sich anschließenden äußeren Schneidecke über den Umfang des Bohrerkörpers radial vorragt, während ein zweites Schneidelement innerhalb des Flugkreises der äußeren Schneidecke des ersten Schneidelementes liegt. Die an den auf der Stirnseite des Bohrerkörpers wirksamen Schneidkanten der Schneidelemente im Zerspanungsbetrieb angreifenden Schnittkräfte erzeugen eine von der Bohrerdrehachse radial nach außen weisende resultierende Radialkraft, die in einer bestimmten, durch die Schneidengeometrie und die Anordnung der Schneidelemente bedingten Winkellage bezüglich der Schneidelemente radial orientiert ist. Die Entstehung und die Richtung dieser Radialkraft sind in der genannten US-Patentschrift erläutert. Sie ist im wesentlichen quer zu den an der Stirnfläche des Bohrerkörpers wirksamen Hauptschneidkanten der Schneidelemente gerichtet und bewirkt, daß im Zerspanungsbetrieb auf den Bohrerkörper ein Biegemoment ausgeübt wird, dessen Wert mit zunehmendem Abstand von der schneidenseitigen Stirnfläche des Bohrerkörpers zunimmt. Bei langen Bohrern ist deshalb dieses Biegemoment an dem einspannseitigen Ende des Bohrerkörpers entsprechend groß.

Die auf gegenüberliegenden Seiten des Bohrerkörpers axial angeordneten Spanräume sind bei dem bekannten Bohrwerkzeug gerade genutet, d.h. parallel zu der Achse des Bohrerkörpers ausgebildet. Sie bedingen notwendigerweise eine gewisse Schwächung des Bohrerkörpers. Da die beim Zerspanungsbetrieb auftretende resultierende Radialkraft schräg zu der Hauptachse des Flächen-Trägheitmomentes in dem gerade genuteten Bohrerschaft gerichtet ist, führt sie zu einer gewissen elastischen Biegeverformung des Bohrerkörpers im Sinne eines sich verbiegenden Profilstabes, mit der Folge, daß das Bohrloch mit einem etwas größeren Durchmesser erzeugt wird, als dem theoretischen Durchmessers des Flugkreises der äußeren Schneidecke des radial außen liegenden Schneidelementes bei unverformtem Bohrerkörper entspricht. Dieser Effekt wird bei dem bekannten Bohrwerkzeug dazu ausgenutzt, das Entstehen von Riefen in der Bohrlochwandung beim Zurückziehen des Bohrwerkzeuges aus dem Bohrloch zu verhüten. Es gibt jedoch Fälle, insbesondere bei großen Bohrerlängen, in denen die vorzugsweise bei hoher Bohrleistung auftretenden elastischen Biegeverformungen des Bohrerkörpers unerwünscht hohe Werte annehmen. Auch kann abhängig von der Richtung und Größe der Radialkraft das Bohrloch sogar mit einem kleineren Durchmesser als dies dem theoretischen Durchmesser entspricht ausfallen.

Es ist beispielsweise aus der US-PS 3 966 349 bekannt, ein aus Hartmetall bestehendes streifenförmiges Stützelement am Umfang des Bohrerkörpers an einer Stelle vorzusehen, an der es die beim Zerspanungsbetrieb auftretende resultierende Radialkraft in die Bohrlochwandung ableiten kann. Solche Stützelemente sind aber teuer und für kleinere Bohrerdurchmesser unzweckmäßig.

Ein anderer Vorschlag gemäß der US-PS 4 149 821 (Faber) besteht darin, durch entsprechende Auslegung der Schneidengeometrie des Bohrwerkzeuges das Auftreten einer resultierenden Radialkraft beim Zerspanungsbetrieb überhaupt zu vermeiden. Da u.a. aus wirtschaftlichen Gründen keine größere Anzahl unterschiedlicher Schneidelemente (Wendeschneidplatten) zum Einsatz kommen sollte, ist es in der Praxis aber nur schwer möglich, bei allen Bohrerdurchmessern einer Bohrwerkzeugsserie resultierende Radialkräfte zu vermeiden. Das gilt auch für ein im Prinzip ähnliches Bohrwerkzeug nach der EP 0 613 746 A2, dessen Schneidengeometrie ebenfalls auf einen Radialkraftausgleich ausgelegt ist. Da beim Austreten des Bohrerkörpers aus dem Bohrloch eines durchgebohrten Werkstückes zuletzt nur mehr die umfangsseitige Wendeschneidplatte arbeitet, tritt an deren Schneiden eine resultierende Radialkraft auf, die zu einer radialen Auslenkung der wirksamen Schneidecke und damit zu einer Verringerung des Bohrlochdurchmessers am Bohrlochende führt. Um diese Auslenkung zu verringern, sind die beiden, auf gegenüberliegenden Seiten der Bohrerkörperachse angeordneten Spanräume über die ganze Länge des Bohrerkörpers bis zu dessen einspannseitigem Ende vollspiralig ausgebildet, wobei der Verdrehwinkel (Verdrehung) über die axiale Länge des Bohrerkörpers wenigstens 110° beträgt. Abgesehen von der durch die vollspiralige Ausbildung der Spanräume bedingten Schwächung des Bohrerkörpers muß für jede Bohrwerkzeuglänge ein anderer Steigungswinkel der vollspiraligen Spanräume verwendet werden, um zu erreichen, daß die resultierende Radialkraft jeweils in der gewünschten Winkellage zu den Richtungen der Achse des maximalen und der Achse des minimalen Flächen-Trägheitsmomentes des Bohrerkörpers an der Einspannseite liegt.

Während das eingangs genannte, in der US-PS 5 049 011 beschriebene Bohrwerkzeug ebenso wie ein ähnliches aus der US-PS 4 563 113 (Ebenhoch) bekanntes Bohrwerkzeug gerade genutete Spanräume aufweist, die parallel zur Bohrerkörperachse ausgerichtet sind, gibt es auch Bohrwerkzeuge, bei denen die Spanräume gewendelt sind, u.a. um eine unterstützende Wirkung für die Spanförderung zu erzielen.

Abgesehen davon, daß solche sogenannte vollspiralige Bohrwerkzeuge im Vergleich zu gerade genuteten Bohrwerkzeugen einen langen Entspanungsweg aufweisen und eine starke Schwächung des Bohrerkörpers ergeben, haben sie das grundsätzliche Problem, daß bei einer Bohrertype mit vorgegebenem Durchmesser die unter dem Einfluß der resultierenden Radialkraft auftretende elastische Verbiegung des Bohrerkörpers mit der Bohrerlänge stark schwankend ist. Das rührt daher, daß sich die Winkellage der Hauptträgheitsachse des Flächen-Trägheitsmomentes in Achsrichtung des Bohrerkörpers fortschreitend entsprechend der schraubenförmigen Windung der Spanräume dreht, mit der Folge, daß sich die räumliche Lage der Richtung der resultierenden Radialkraft zu der Richtung der Hauptträgheitsachse des Flächen-Trägheitsmomentes des Bohrerkorpers an der Wurzel der Spanräume, d.h. im Bereich der Einspannstelle des Bohrwerkzeuges, abhängig davon ergibt, an welcher Stelle des Umfanges die Spanraumenden jeweils zu liegen kommen. Bei gegebenem Steigungswinkel ist der Verdrehwinkel der Wendel von deren Länge und damit eben der Bohrerlänge abhängig. Da die Winkellage der resultierenden Radialkraft zu der Hauptträgheitsachse des Flächen-Trägheitsmomentes an der Einspannstelle des Bohrerkörpers Richtung und Größe der im Zerspanungsbetrieb am schneidenseitigen Ende des Bohrerkörpers auftretenden elastischen radialen Ausbiegung bestimmen, können spiralgenutete Bohrwerkzeuge prinzipiell gleichen Aufbaus, aber geringfügig verschiedener Länge, schon stark unterschiedliche Ergebnisse beim Bohren erbringen. Beispiele für solche spiralgenutete Bohrwerkzeuge sind in der EP 0 589 333 A1, der EP 0 118 035 B1 beschrieben, wobei diese Bohrwerkzeuge teilweise mit schraubenförmig verlaufenden innenliegenden Kühlkanälen für die Schneidelemente ausgebildet sind. Derart gestaltete Kühlkanäle sind aber aufwendig in der Herstellung.

In der Praxis sind daneben auch Bohrwerkzeuge bekannt, deren Bohrerkörper im Bereiche der Schneidelementensitze gerade oder leicht schräg genutete Spanräume aufweist, an die sich dann stark gewendelte Spanraumabschnitte anschließen, welche sich bis zu dem Einspannbereich des Bohrerkörpers erstrecken. Dabei kann der gewendelte Abschnitt auch seinerseits wieder in Abschnitte unterschiedlicher Wendelsteigung unterteilt sein. Für diese Bohrwerkzeuge gelten im Prinzip auch die obigen Ausführungen.

Ausgehend von diesem Stand der Technik ist es Aufgabe der Erfindung, ein Bohrwerkzeug zu schaffen, das sich bei günstigen Spanabfuhrbedingungen durch eine hohe Steifigkeit des Bohrerkörpers gegen elastische Biegeverformungen unter der Einwirkung von beim Zerspanungsbetrieb auftretenden Radialkräften auszeichnet.

Zur Lösung dieser Aufgabe weist das Bohrwerkzeug gemäß der Erfindung die Merkmale des Patentanspruch 1 auf.

Das neue Bohrwerkzeug weist die eingangs genannten Merkmale auf und ist mit Mitteln zur Verbesserung der Steifigkeit des Bohrerkörpers gegen elastische Verbiegungen unter dem Einfluß der bei der Zerspanung auftretenden resultierenden Radialkraft gestaltet, die Ausbildung der Spanräume in dem Bohrerkörper umfassen. Dazu ist jeder Spanraum in drei axial aneinander anschließende Abschnitte aufgeteilt, von denen in einem an die schneidenseitige Stirnfläche des Bohrerkörpers anschließenden und wenigstens einen Schneidelementensitz enthaltenden ersten Abschnitt der Spanraum im wesentlichen gerade oder schräg genutet ausgebildet ist. In einem daran anschließenden zweiten Abschnitt ist der Spanraum teilgewendelt mit einer Verdrehung von kleiner als 90° bezüglich der Bohrerkörperachse über seine axiale Länge ausgebildet und in einem daran anschließenden dritten Abschnitt ist der Spanraum wieder im wesentlichen gerade genutet. Die Verdrehung in dem zweiten, teilgewendelten Abschnitt ist derart bemessen, daß die Hauptträgheitsachse des Flächen-Trägheitsmomentes in dem dritten gerade genuteten Abschnitt zumindest näherungsweise in die Richtung der bei der Zerspanung auftretenden resultierenden Radialkraft weist. Der zweite Abschnitt beginnt dabei in der Regel in Achsrichtung unmittelbar an den Schneidelementen des ersten Abschnitts anschließend.

Durch die Ausrichtung der Hauptträgheitsachse des Flächen-Trägheitsmomentes des Bohrerkörpers in dem dritten gerade genuteten Abschnitt auf die Richtung der bei der Zerspanung auftretenden, an den wirksamen Schneiden der Schneidelemente angreifenden resultierenden Radialkraft wird eine optimale Steifigkeit des Bohrerkörpers erzielt. Da der an die Einspannseite des Bohrwerkzeuges angrenzende dritte Abschnitt gerade genutet ist, gelten für unterschiedliche Längen von Bohrwerkzeugen gleicher Type hinsichtlich der elastischen Verbiegung des Bohrerkörpers um die Wurzel der Spanräume ähnliche, vorhersehbare Bedingungen. Der teilgewendelte zweite Abschnitt bedingt wegen seiner geringen Länge nur eine geringfügige Verlängerung des Entspanungsweges gegenüber gerade genuteten Spanräumen in diesem Abschnitt und eine geringstmögliche Schwächung des Bohrerkörpers, so daß auch dessen Torsionssteifigkeit nicht wesentlich beeinträchtigt wird. Gleichzeitig bewirken die teilgewendelten Spanräume eine Förderunterstützung für die in dem ersten Abschnitt an den Schneiden der Schneidelemente entstehenden Späne, die sie einwandfrei in die gerade genuteten Spanräume des dritten Abschnittes leiten. Gerade dieser an die Schneidelementensitze sich unmittelbar anschließende Bereich ist wesentlich für die Formung und Orientierung der Späne in dem in dem Bohrloch eingeschlossenen Spankanal. Die Spanabfuhr in den in dem dritten Abschnitt axial weiter hinten liegenden Spanräume ist wegen deren gerade genuteter Form problemlos, da hier die Späne nur noch aus dem Bohrloch hinausgeschoben werden. Die Späne werden in dem zweiten Abschnitt von der Bohrungswand weggelenkt, womit verhindert ist, daß sie etwa nach außen gegen die Bohrungwand gedrückt werden können. Zur Unterstützung dieser Wirkung können die Spanräume auch mit einem insbesondere positiven Radialwinkel ausgebildet werden.

Schließlich erlaubt die verhältnismäßig geringe Verdrehung in dem zweiten teilgewendelten Abschnitt eine sehr einfach herzustellende Ausbildung von Kühlmittelkänalen für die Schneidelemente. Es können nämlich in dem Bohrerkörper sich zumindest über einen Teil der Länge der Spanräume - oder deren gesamte Länge - erstreckende gerade Kühlmittelkanäle vorgesehen werden, die einfach herzustellen sind.

Weiterbildungen des neuen Bohrwerkzeuges sind Gegenstand von Unteransprüchen.

In der Zeichnung ist ein Ausführungsbeispiel des Gegenstandes der Erfindung dargestellt. Es zeigen:
Fig. 1 ein Bohrwerkzeug gemäß der Erfindung in perspektivischer Darstellung,
Fig. 2 das Bohrwerkzeug nach Fig. 1, in einer Seitenansicht,
Fig. 3 das Bohrwerkzeug nach Fig. 1, in einer anderen Seitenansicht und mit geänderter Ausführung der Kühlmittelkanäle,
Fig. 4 die teilweise Abwicklung eines Spanraums des Bohrwerkzeugs nach Fig. 1,
Fig. 5 das Bohrwerkzeug nach Fig. 1, in einer Ansicht von der schneidenseitigen Stirnfläche her,
Fig. 6 das Bohrwerkzeug nach Fig. 1, unter Veranschaulichung des Querschnittes des Bohrerkörpers an der Stelle VI-VI der Fig. 4 und
Fig. 7 das Bohrwerkzeug nach Fig. 1, unter Veranschaulichung des Querschnittes des Bohrerkörpers an der Stelle VII-VII der Figur 4.

Das in der Zeichnung dargestellte Bohrwerkzeug dient zum Erzeugen von Bohrungen in Werkstücken aus Stahl oder anderen metallischen Werkstoffen sowie Kunststoff und dergleichen. Es weist einen aus Stahl bestehenden, im wesentlichen zylindrischen Bohrerkörper 1 auf, der auf der Einspannseite einen zylindrischen koaxialen Einspannschaft 2 trägt, welcher auf einer Seite sich an einen koaxialen Ringflansch 3 größeren Durchmessers anschließt, der zu dem schneidenseitigen Ende 4 des Bohrerkörpers 1 hin durch eine kegelstumpfförmige Ringfläche 5 begrenzt ist. Der Spannschaft 2 ist mit einer üblichen Abflachung 6 versehen.

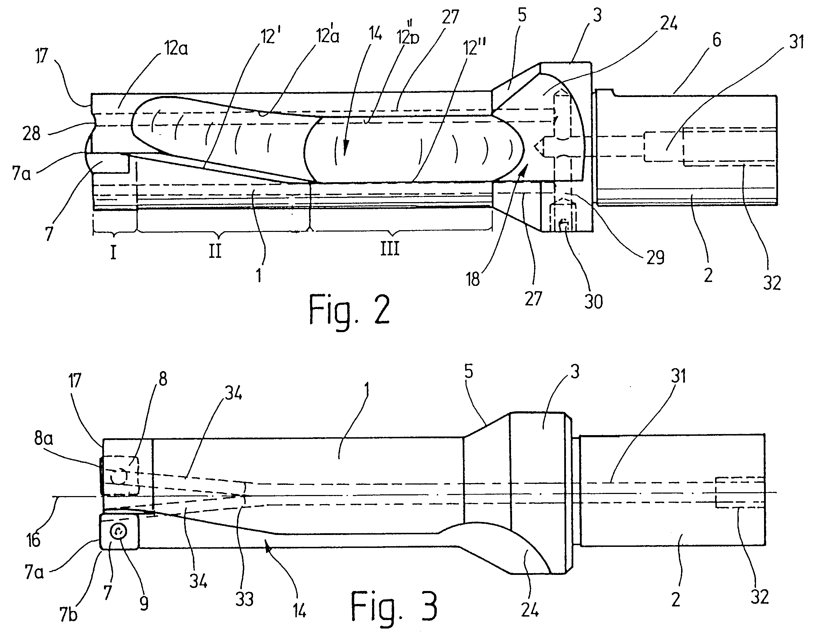

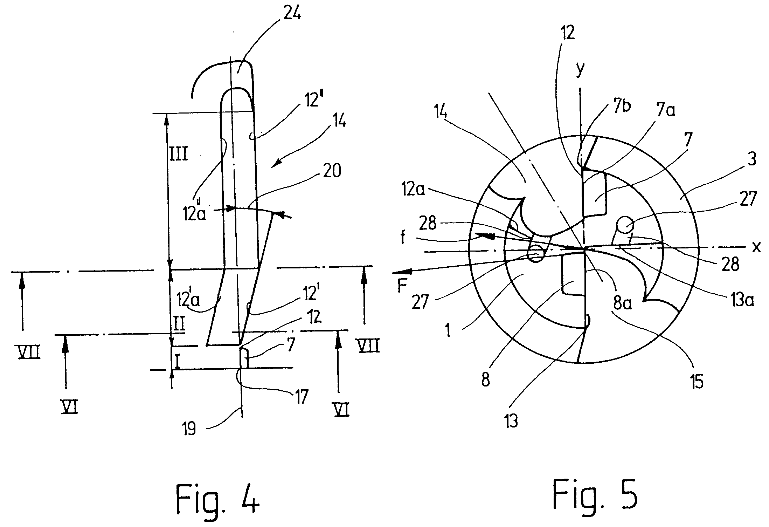

In dem zylindrischen Bohrerkörper 1 sind im Bereiche des schneidenseitigen Endes 4 zwei Schneidelemente in Gestalt von Wendeschneidplatten 7, 8 aus Hartmetall angeordnet, die im vorliegenden Falle im wesentlichen quadratisch ausgebildet und mit jeweils einer ein Befestigungsloch der Wendeschneidplatte durchdringenden Befestigungsschraube 9 lösbar an dem Bohrerkörper 1 festgeschraubt sind. Die Wendeschneidplatten 7, 8 sind jeweils pyramidenstumpfförmig als sogenannte Positivplatten ausgebildet und in Sitzen 10, 11 aufgenommen, die in Form von taschenartigen Ausnehmungen im Bereiche der Seitenwände 12, 13 (Fig. 5) von zwei im wesentlichen nutenförmigen Spanräumen 14, 15 angeordnet sind, die sich zu beiden Seiten der in Fig. 3 bei 16 angedeuteten Bohrerkörperlängsachse erstrecken. Jeder der Spanräume 14, 15 mündet in der schneidenseitigen Stirnfläche 17 des Bohrerkörpers 1 und verläuft bis zu einer Wurzel 18 im Bereiche des Ringflansches 3.

Die beiden Wendeschneidplatten tragen auf ihrer größeren Breitseite am Rand jeweils vier nacheinander abarbeitbare paarweise zueinander parallele Schneidkanten, von denen in den Figuren die jeweils über die Stirnfläche 17 des Bohrerkörpers 1 radial vorragende Schneidkante - die wirksame Hauptschneidkante - mit 7a bzw. 8a bezeichnet ist.

Wie insbesondere aus den Figuren 3, 5 zu entnehmen, sind die Wendeschneidplatten 7, 8 in unterschiedlichem radialem Abstand von der Bohrerkörperachse 16 derart angeordnet, daß die radial außenliegende Wendeschneidplatte 7 mit einer radial außenliegenden, sich an die wirksame Hauptschneide 7a anschließenden Schneidecke 7b radial über den Umfang des zylindrischen Bohrerkörpers 1 vorsteht und die andere radial innenliegende Wendeschneidplatte 8 mit ihrer Hauptschneide 8a, die Bohrerkörperachse 16 schneidet oder in deren unmittelbaren Nähe verläuft und im übrigen innerhalb des Flugkreises der äußeren Schneidecke 7b der anderen Wendeschneidplatte 7 liegt. Beide Wendeschneidplatten 7, 8 sind jeweils mit einem zweckentsprechenden Axial- und Radialwinkel eingesetzt, wie dies im einzelnen beispielsweise in der US-PS 5 049 011 der Anmelderin erläutert ist.

Bei arbeitendem Bohrwerkzeug, d.h. bei der Zerspanung des Werkstückes, greifen an den wirksamen Hauptschneidkanten 7a, 8a den Schnittkräften entsprechende Reaktionskräfte an, die sich zufolge der gewählten Schneidengeometrie zu einer von der Bohrerkörperachse 16 radial nach außen gerichteten resultierenden Radialkraft F addieren. Diese resultierende Radialkraft F ist im wesentlichen quer zu den näherungsweise auf einem gemeinsamen Durchmesser liegenden Hauptschneiden 7a, 8a der beiden Wendeschneidplatten 7, 8 gerichtet, wobei ihre genaue Winkellage in dem in den Figuren 5 bis 7 eingetragenen x-, y-Koordinatensystem von der Schneidengeometrie und der Einbaulage der Wendeschneidplatten 7, 8 abhängt. Das kartesische Koordinatensystem x, y ist auf die Bohrerkörperachse 16 als z-Achse bezogen und zur Orientierung so ausgerichtet, daß die y-Achse in der näherungsweise die wirksamen Hauptschneiden 7a, 8a enthaltenden Durchmesserebene liegt.

Die bei der Zerspanung auftretende resultierende Radialkraft F, die an dem schneidenseitigen Ende 4 des Bohrerkörpers 1 angreift, übt auf den Bohrerkörper 1 ein Biegemoment aus, das von der Stirnfläche 17 zu der Einspannseite des Bohrerkörpers 1 hin zunimmt und seinen Maximalwert im Bereiche der Wurzel 18 der Spanräume 14, 15 erreicht. Es bewirkt eine gewisse elastische seitliche Biegung des Bohrerkörpers 1, die zu einem radialen Auswandern der äußeren Schneidecke 7b der äußeren Wendeschneidplatte 7 in Richtung des Pfeiles f in Fig. 5 führt. Bei kurzen Bohrerlängen kann dieser Effekt dazu ausgenutzt werden, beim Zurückziehen des Bohrers aus dem Bohrloch Riefen in der Bohrlochwandung zu vermeiden. Insbesondere bei großen Bohrerlängen kann sich aber eine Beeinträchtigung der Genauigkeit des Bohrloches ergeben. Um die elastische Biegung des Bohrerkörpers beim Zerspanen des Werkstückes auf ein für den praktischen Gebrauch unbeachtliches Minimum zu reduzieren, sind an dem Bohrwerkzeug besondere Mittel vorgesehen:

Die beiden nutenförmigen Spanräume 14, 15 sind jeweils in drei Abschnitte unterteilt, die in den Figuren 2 und 4 jeweils mit I, II und III bezeichnet sind und in denen die Spanräume unterschiedlich gestaltet oder angeordnet sind.

Der erste Spanraumabschnitt I geht von der Stirnfläche 17 des Bohrerkörpers 1 aus und erstreckt sich in axialer Richtung nur geringfügig über die axiale Erstreckung der Wendeschneidplatten 7, 8 hinaus. In diesem Abschnitt I sind die im wesentlichen als rechtwinklige, mit dem Scheitel auf die Bohrerkörperachse 16 zuweisend angeordnete Nuten ausgebildeten Abschnitte der Spanräume 14, 15 im wesentlichen gerade genutet, d.h. ihre Seitenwände 12, 12a bzw. 13, 13a sind etwa parallel zu der Bohrerkörperachse 16 ausgerichtet. Alternativ wäre auch eine Ausführungsform denkbar, bei der die Spanräume 14, 15 in den Abschnitt I leicht schräg genutet sind, d.h. einen kleinen Axialwinkel mit der Bohrerkörperachse 16 einschließen. Die Plattensitze 10, 11 enthaltenden Seitenwände 12, 13 sind eben ausgebildet und liegen etwa in Durchmesserebenen des Bohrerkörpers 1. Die Plattensitze 10, 11 aufnehmenden taschenartigen Vertiefungen sind so gewählt, daß die Wendeschneidplatten 7, 8 mit ihrer Oberseite mit diesen Seitenwänden 12, 13 fluchten oder nur geringfügig über diese vorstehen. Die beiden anderen Seitenwände 12a, 13a können ebenso ebene Flächen sein, wie dies im vorliegenden Falle für die Seitenwand 13a neben der radial innenliegenden Wendeschneidplatte 8 gilt. Sie können aber auch konkav gekrümmt sein, wie dies bei dem dargestellten Ausführungsbeispiel bei der Spanraumseitenwand 12a ausgeführt ist.

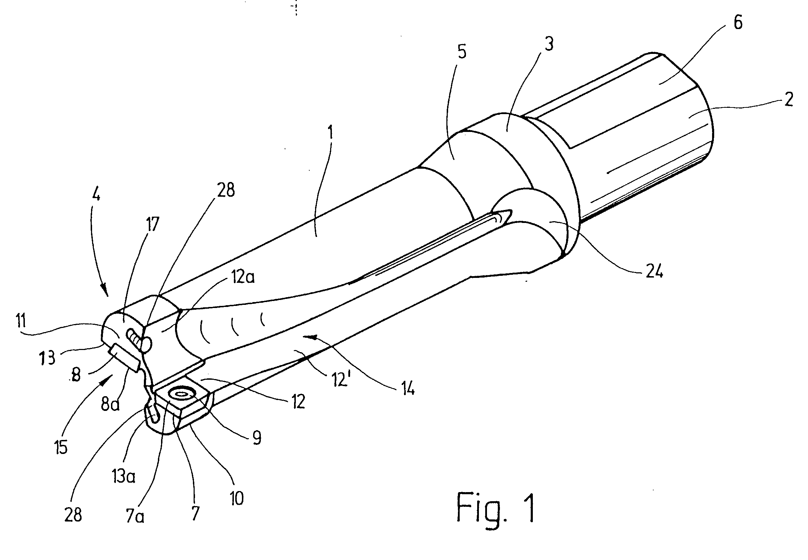

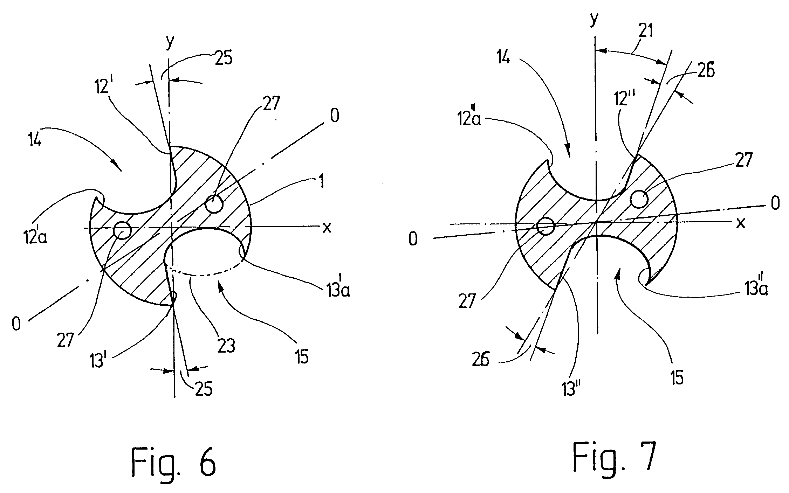

In den an den ersten Abschnitt I sich axial unmittelbar anschließenden Abschnitt II sind die beiden Spanräume 14, 15 teilgewendelt ausgebildet. Wie aus der Abwicklung des der radial äußeren Wendeschneidplatte 7 zugeordneten Spanraumes 14 in Fig. 4 zu entnehmen, beträgt der gegen eine die Bohrerkörperachse 16 enthaltende Durchmesserebene 19 gemessene Steigungswinkel 20 der Wendelung bei dem gewählten Ausführungsbeispiel (bezogen auf einen Bohrerkörperdurchmesser von 24 mm) ca. 15°, was über die axiale Länge des teilgewendelten Abschnittes II einer Verdrehung der Spanräume 14, 15 im Uhrzeigersinn bezogen auf Fig. 1 um ca. 30° entspricht. Der Steigungswinkel 20 liegt für gängige Bohrkörperdurchmesser in der Regel in dem Bereich von ca. 5° bis 30°, während die Verdrehung der Spanräume 14, 15 über die axiale Länge des Abschnittes II normalerweise ca. 10° bis 60° beträgt. Diese Verdrehung der Spanräume über die Länge des teilgewendelten Abschnittes II ist aber in jedem Fall kleiner als 90° längs des Umfanges des Bohrerkörpers 1. Sie ergibt sich aus einem Vergleich der stirnseitigen Draufsicht auf den Bohrerkörper 1 nach Fig. 5 und der Querschnittsdarstellung nach Fig. 7 am Ende des Abschnitts II und ist mit 21 bezeichnet.

Die genaue Bemessung der Verdrehung 21, die über die axiale Länge des teilgewendelten Abschnittes II erzielt werden soll, hängt von der Gestaltung der Spanräume 14, 15 und des Bohrerkörpers 1 ab. Sie ist so gewählt, daß die in Fig. 7 mit O-O bezeichnete Hauptachse des Flächen-Trägheitsmomentes für Biegung des Bohrerkörpers 1 am Ende des teilgewendelten Abschnittes II um die Bohrerkörperachse 16 in eine Winkellage gedreht ist, die zumindest näherungsweise der Winkellage der beim Zerspanen auftretenden resultierenden Radialkraft F nach Fig. 5 entspricht. Da der Bohrerkörper 1, in dem sich an den teilgewendelten Abschnitt II anschließenden Abschnitt III gegen eine Biegung in Richtung der Hauptträgheitsachse O-O, d.h. der Achse seines größten Flächen-Trägheitsmomentes, die maximale Steifigkeit aufweist, ist bei dieser Ausrichtung der Hauptträgheitsachse des Flächen-Trägheitsmoments auf die Richtung der resultierenden Radialkraft F die bei der Zerspanung auftretende radiale Auswanderung der radial außen liegenden Schneidecke 7b der radial außen liegenden Wendeschneidplatte minimal und auf jeden Fall so klein, daß sie die zu erzielende Genauigkeit des Bohrvorgangs nicht beeinträchtigt.

Die genaue Winkellage der Hauptträgheitsachse O-O bezüglich der Spanräume 14, 15 am Ende des teilgewendelten Abschnittes II kann berechnet oder experimentell ermittelt werden. Gleiches gilt auch für die Orientierung der abhängig von der jeweils verwendeten Schneidengeometrie und Einbaulage der Wendeschneidplatten 7, 8 auftretenden resultierenden Radialkraft F.

In dem teilgewendelten Abschnitt II weisen die beiden Spanräume 14, 15 anschließend an die ebenen Seitenwandabschnitte 12, 13 des gerade genuteten Abschnittes I jeweils einen schraubenförmig gewendelten, vom Umfang des Bohrerkörpers 1 ausgehenden streifenförmigen Bereich 12', 13' auf, der quer zur Längserstreckung eben ist. Radial nach innen zu an diesen streifenförmigen Bereich 12' bzw. 13' anschließend sind die beiden Spanräume 14, 15 in dem Abschnitt II im Querschnitt im wesentlichen ellipsenförmig gekrümmt, wie dies beispielsweise aus Fig. 6 zu ersehen ist, wobei bei 23 der (theoretische) Umriß der Ellipse strichpunktiert vervollständigt ist.

In dem an den teilgewendelten Abschnitt II sich axial anschließenden Abschnitt III (Fig. 2, 4) sind die beiden Spanräume 14 gerade genutet, d.h. parallel zu der Bohrerkörperachse 16 ausgerichtet. Die in dem teilgewendelten Abschnitt II schraubenförmig gewundenen, von dem Umfang des Bohrkörpers 1 ausgehenden streifenförmigen ebenen Seitenwandungsbereiche 12' und 13' setzen sich in dem Abschnitt III gerade verlaufend als Abschnitte 12'' bzw. 13'' fort. Im übrigen weisen die Spanräume 14, 15 in dem Abschnitt III ebenfalls eine im wesentlichen elliptische Querschnittsform auf, wie dies aus Fig. 7 zu ersehen ist.

Da die Spanräume 14, 15 in dem Abschnitt III gerade genutet ausgebildet sind und der Bohrerkörper 1 einen konstanten Durchmesser aufweist, bleibt das Flächen-Trägheitsmoment des Bohrkörpers 1 über die axiale Länge des Abschnittes III unverändert. Abhängig von der jeweils gewünschten Bohrerlänge kann die Länge des gerade genuteten Abschnittes III des Bohrerkörpers 1 somit zweckentsprechend bemessen werden, ohne daß sich der Stirnbereich des Bohrwerkzeuges in dem Abschnitt I und die Verdrehung in dem anschließenden teilgewendelten Abschnitt II dadurch verändern würden. Unabhängig von der zu erzielenden Bohrtiefe ergeben sich hinsichtlich der Biege- und Torsionssteifigkeit des Bohrerkörpers immer gleichbleibende Verhältnisse; es wird einfach eine Verlängerung des Bohrerkörpers 1 im gerade genuteten Bereich III vorgenommen.

Beim Bohren, d.h. beim Zerspanen des Werkstückes, werden die an den wirksamen Hauptschneiden 7a, 8a der Wendeschneidplatten 7, 8 entstehenden Späne in dem sich anschließenden teilgewendelten Abschnitt II von der Wendeschneidplatte 7 bwz. 8 gegenüberliegenden Spanraumseitenwand 12'a bzw. 13'a aufgenommen, so daß sie nicht radial nach außen in Richtung Bohrungswand gedrückt werden. Sie werden vielmehr entsprechend der Teilwendel in die gerade genuteten Spanraumteile des gerade genuteten Abschnittes III geleitet, durch die sie dann über eine in dem Ringflansch 3 ausgebildete gekrümmte Auslaufmulde 24 radial nach außen geleitet werden. In dem teilgewendelten Abschnitt II erfahren die in dem gerade genuteten Abschnitt I gebildeten Späne wegen der Wendelform der Spanräume 14, 15 eine gewisse Förderunterstützung, da die Wendelung bei Draufsicht auf die schneidenseitige Stirnfläche des Bohrerkörpers entgegen der Arbeitsdrehrichtung des Bohrwerkzeuges ausgebildet ist. Diese Wirkung kann noch dadurch unterstützt werden, daß die Spanräume 14, 15 in den Abschnitten II und III mit einem bestimmten positiven Radialwinkel angeordnet sind, der in der Größenordnung von ca. 4 bis ca. 20° liegen kann. Diese positiven Radialwinkel, den die ebenen Seitenwandbereiche 12', 12'' bzw. 13', 13'' mit dem jeweiligen Radius einschließen, sind in den Figuren 6, 7 bei 25, 26 eingetragen. Sie sind im vorliegenden Fall für die beiden Spanräume 14, 15 verschieden, wobei der Radialwinkel für den der radial innenliegenden Wendeschneidplatte 8 zugeordneten Spanraum 15 kleiner ist als bei dem Spanraum 14. Die Radialwinkel können auch gleich sein oder im entgegengesetzten Sinne, wie oben beschrieben, ungleich sein.

Die beschriebene Ausbildung des Bohrerkörpers 1 mit den lediglich in dem Abschnitt II teilgewendelten Spanräumen 14, 15 erlaubt eine einfach herzustellende Ausbildung von Kühlmittelkanälen für die Wendeschneidplatten 8, 9. Wie insbesondere aus den Fig. 6, 7 zu entnehmen, läßt nämlich der im wesentlichen I- oder hantelförmige Querschnitt des Bohrerkörpers 1 über seine gesamte Länge die Unterbringung von zwei achsparallelen Kühlmittelkanälen 27 zu, die im radialen Abstand von der Bohrerkörperachse 16 angeordnet sind und in der Stirnfläche 17 münden. Einer gewendelten oder anderen komplizierten Gestaltung der Kühlmittelkanäle bedarf es nicht. In der Stirnfläche 17 sind nutenförmige Stichkanäle 28 ausgebildet (Fig. 1), die in die Spanräume 14, 15 in der Nähe der Wendeschneidplatten 7, 8 führen und die mit den Kühlmittelkanälen 27 in Verbindung stehen. An ihrem anderen Ende gehen die Kühlmittelkanäle 27 in der aus Fig. 2 zu entnehmenden Weise von einem radialen Verteilerkanal 29 in dem Ringflansch 3 ab, der als einseitig durch einen Gewindestopfen 30 verschlossene Sackbohrung ausgeführt ist und in den ein zu der Bohrkörperachse 16 koaxialer Zuleitungskanal 31 durch den Spannschaft 2 führt. Ein zugeordnetes, in dem Spannschaft 2 vorgesehenes Innengewinde 32 dient zum Anschluß einer nicht weiter dargestellten Kühlmittelleitung.

Insbesondere bei Bohrwerkzeugen mit größerem Durchmesser des Bohrerkörpers 1 kann alternativ die Kühlmittelversorgung der Wendeschneidplatten 7, 8 auch in der aus Fig. 3 ersichtlichen Weise getroffen werden. Bei dieser Ausführungsform ist der zu der Bohrerkörperachse 16 koaxiale Kühlmittel-Zuführkanal 31 bis zu einer Verzweigungsstelle 33 im Bereiche des Abschnittes II verlängert. An der Verzweigungsstelle 33 gehen von ihm zwei einen spitzen Winkel miteinander einschließende, als gerade Bohrungen ausgebildete Kanäle 34 zu der Stirnseite 17 des Bohrerkörpers 1 hin ab, wo sie in die Stichkanäle 28 münden. Diese Ausführungsform setzt voraus, daß die zwischen den beiden Spanräumen 14, 15 verbleibende Seele des Bohrerkörpers 1 ausreichend groß ist, um den zentralen Zuleitungskanal 31 ohne unzulässige Schwächung des Bohrerkörpers 1 aufzunehmen.

Bei dem beschriebenen Ausführungsbeispiel des neuen Bohrwerkzeuges weisen die Spanräume 14, 15 ausgehend vom Umfang des Bohrerkörpers 1 jeweils einen streifenförmigen Bereich 12, 12', 12'' bzw. 13, 13', 13'' auf, der eben und nur in dem teilgewendelten Bereich II zusätzlich schraubenförmig gewunden ist. Alternativ könnte dieser Bereich auch konkav oder konvex ausgebildet sein.

Außerdem sei erwähnt, daß es auch Bohrwerkzeuge gibt, die mehr als zwei Spanräume aufweisen, von denen jedem entsprechende Schneidelementensitze zugeordnet sind. Auch auf solche Werkzeuge ist die Erfindung in gleicher Weise anwendbar. Das Gleiche gilt auch für Bohrwerkzeuge, die nur einen Spanraum haben.

## Patentansprüche

1. Bohrwerkzeug, insbesondere für metallische Werkstoffe,
- mit einem im wesentlichen zylindrischen Bohrerkörper (1), der an einem einspannseitigen Ende einen koaxialen Spannschaft (2) trägt und an seinem anderen, schneidenseitigen Ende (4) mit Schneidelementen (7, 8) bestückt ist,
- mit mindestens einem am Außenumfang des Bohrerkörpers (1) ausgebildeten nutenförmigen Spanraum (14; 15), der am schneidenseitigen Ende (4) des Bohrerkörpers (1) in dessen Stirnfläche (17) mündet und sich über die Länge des Bohrerkörpers bis in den Bereich dessen einspannseitigen Endes erstreckt,
- mit wenigstens einem im Bereiche des jeweiligen Spanraumes (14; 15) am schneidenseitigen Ende (4) des Bohrerkörpers (1) ausgebildeten Sitz (10; 11) zur Aufnahme zumindest eines Schneidelementes (7; 8),
- mit wenigstens einem auf einem zugeordneten Sitz (10; 11) befestigten, zumindest eine an der Stirnseite des Bohrerkörpers wirksame Schneide (7a) aufweisenden Schneidelement (7), das mit einer an eine Schneide (7a) sich anschließenden äußeren Schneidecke (7b) über den Umfang des Bohrerkörpers (1) radial vorragend angeordnet ist und dem gegebenenfalls wenigstens ein weiteres, vorzugsweise innerhalb des Flugkreises der erwähnten äußeren Schneidecke (7b) liegendes Schneidelement (8) mit einer wirksamen Schneide (8a) zugeordnet ist, wobei die an zumindest der bzw. an den auf der Stirnseite des Bohrerkörpers (1) wirksamen Schneiden (7a; 8a) bei der Zerspanung angreifenden Schnittkräfte eine resultierende Radialkraft (F) ergeben, die in einer bestimmten Winkellage bezüglich des Schneidelementes radial orientiert ist und
- dadurch gekennzeichnet daß Mittel zur Verbesserung der Steifigkeit des Bohrerkörpers (1) gegen elastische Verbiegungen unter dem Einfluß der genannten resultierenden Radialkraft (F) vorgesehen sind, wobei diese Mittel die Ausbildung des Spanraumes oder der Spanräume (14, 15) in dem Bohrerkörper (1) umfassen, indem jeder Spanraum (14; 15) in drei axial aneinander anschließende Abschnitte (I, II, III) aufgeteilt ist, von denen
- in einem an die schneidenseitige Stirnfläche (17) des Bohrerkörpers (1) anschließenden und wenigstens einen Schneidelementensitz (10; 11) enthaltenden ersten Abschnitt (I) jeder Spanraum (14; 15) im wesentlichen gerade oder schräg genutet ausgebildet ist,
- in einem daran anschließenden zweiten Abschnitt (II) jeder Spanraum (14; 15) teilgewendelt mit einer Verdrehung (21) von weniger als 90° bezüglich der Bohrerkörperachse (16) über seine axiale Länge ausgebildet ist, wobei die Verdrehung in dem zweiten, teilgewendelten Abschnitt (II) derart bemessen ist, daß die Haupträgheitsachse (0-0) des Flächen-Trägheitsmomentes in einen anschließenden dritten, Abschnitt (III) zumindest näherungsweise in die Richtung der resultierenden Radialkraft (F) weist und
- in dem daran anschließenden dritten Abschnitt (III) jeder Spanraum (14; 15) wieder im wesentlichen gerade genutet ausgebildet ist.

2. Bohrwerkzeug nach Anspruch 1, dadurch gekennzeichnet, daß der Steigungswinkel (20) in dem zweiten teilgewendelten Abschnitt (II) zwischen ca. 5° und ca. 30°, vorzugsweise bei ca. 15° liegt.

3. Bohrwerkzeug nach Anspruch 1 oder 2, dadurch gekennzeichnet, daß die Verdrehung (21) über die axiale Länge in den zweiten teilgewendelten Abschnitt (II) zwischen ca. 10° und ca. 60°, vorzugsweise ca. 30° beträgt.

4. Bohrwerkzeug nach einem der vorhergehenden Ansprüche, dadurch gekennzeichnet, daß in dem ersten Bereich (I) zumindest die einen Schneidelementensitz (10; 11) enthaltende Seitenwand (12 ; 13) jedes Spanraumes (14, 15) im wesentlichen eben ist.

5. Bohrwerkzeug nach Anspruch 4, dadurch gekennzeichnet, daß in dem ersten Bereich wenigstens ein Spanraum (15) durch zwei im wesentlichen ebene Seitenwände (13, 13a) begrenzt ist.

6. Bohrwerkzeug nach Anspruch 4 oder 5, dadurch gekennzeichnet, daß zumindest in dem zweiten teilgewendelten Bereich (II) die den Spanraum (14) auf der einem radial außenliegenden Schneidelement (7) zugeordneten Seite begrenzende Seitenwand (12) des entsprechenden Spanraumes ausgehend vom Umfang des Bohrerkörpers (1) einen streifenförmigen Bereich (12') aufweist, der schraubenförmig gewunden ist.

7. Bohrwerkzeug nach einem der vorhergehenden Ansprüche, dadurch gekennzeichnet, daß jeder Spanraum (14, 15) wenigstens auf seiner der Bohrerkörperachse zugewandten Seite im Querschnitt im wesentlichen kreis- oder ellipsenförmig gekrümmt ausgebildet ist.

8. Bohrwerkzeug nach einem der vorhergehenden Ansprüche, dadurch gekennzeichnet, daß in dem zweiten Bereich (II) die den jeweiligen Spanraum (14, 15) begrenzenden Seitenwände einen von Null verschiedenen Radialwinkel (25, 26) aufweisen.

9. Bohrwerkzeug nach Anspruch 8, dadurch gekennzeichnet, daß der Radialwinkel positiv ist.

10. Bohrwerkzeug nach Anspruch 9 oder 10, dadurch gekennzeichnet, daß der Radialwinkel zwischen ca. 4° und ca. 20°, vorzugsweise ca. 6° bis 8° beträgt.

11. Bohrwerkzeug nach einem der vorhergehenden Ansprüche, dadurch gekennzeichnet, daß in dem dritten Abschnitt (III) die den jeweiligen Spanraum (14, 15) begrenzenden Seitenwände an wenigstens einer Seite einen von Null verschiedenen Radialwinkel aufweisen.

12. Bohrwerkzeug nach Anspruch 11, dadurch gekennzeichnet, daß der Radialwinkel positiv ist.

13. Bohrwerkzeug nach Anspruch 11 oder 12, dadurch gekennzeichnet, daß der Radialwinkel zwischen ca. 4° und 20° liegt, vorzugsweise ca. 8° beträgt.

14. Bohrwerkzeug nach einem der vorhergehenden Ansprüche, dadurch gekennzeichnet, daß jeder Schneidelementensitz (10, 11) in einer taschenartigen Vertiefung in einer Seitenwand (12, 13) des ersten Abschnittes (I) des jeweiligen Spanraumes ausgebildet ist und die jeweilige Seitenwand (12; 13) des Spanraumes mit der Oberseite des zugeordneten Schneidelementes (7, 8) im wesentlichen in einer gemeinsamen Ebene liegt oder gegen diese geringfügig zurückgesetzt ist.

15. Bohrwerkzeug nach einem der vorhergehenden Ansprüche, dadurch gekennzeichnet, daß in dem Bohrerkörper (1) zu wenigstens einem Schneidelement (7, 8) führende, sich zumindest über einen Teil der Länge der Spanräume (14, 15) erstreckende gerade Kühlmittelkanäle (27; 31) ausgebildet sind.

16. Bohrwerkzeug nach Anspruch 15, dadurch gekennzeichnet, daß der jeweilige Kühlmittelkanal (27; 34) auf der schneidenseitigen Stirnfläche (17) des Bohrerkörpers (1) mündet.

17. Bohrwerkzeug nach Anspruch 16, dadurch gekennzeichnet, daß in dem ersten Abschnitt (I) wenigstens ein von dem Kühlmittelkanal (27) in einen Spanraum (14, 15) führender Stichkanal (28) ausgebildet ist.

18. Bohrwerkzeug nach Anspruch 17, dadurch gekennzeichnet, daß der Stichkanal (28) als Nut in der Stirnfläche (17) des Bohrerkörpers (1) ausgebildet ist.

## Claims

1. Drilling tool, in particular for metallic materials, having
- an essentially cylindrical drill body (1), which on a fastening end has a coaxial fastening shank (2) and on its other end (4) towards the cutting edge is equipped with cutting elements (7, 8);
- at least one groove-like chip removal space (14; 15) formed on the outer circumference of the drill body (1), this space being open at the cutting edge end (4) of the drill body (1) in the end face (17) thereof and extending over the drill body into the region of its fastening end;
- at least one seat (10; 11) formed in the region of the respective chip removal space (14; 15) at the cutting edge end (4) of the drill body (1) for receiving at least one cutting element (7; 8);
- at least one cutting element (7) secured to an associated seat (10; 11) and having at least one cutting edge (7a) operative on the face end of the drill body, said cutting element, with an outer cutting edge corner (7b) adjoining a cutting edge (7a), protruding radially beyond the circumference of the drill body (1) and being optionally assigned at least one further cutting element (8) preferably located inside the flight circuit of the aforementioned outer cutting edge corner (7b) and having an effective cutting edge (8a), wherein the cutting forces acting during machining on at least the cutting edge or edges (7a; 8a) operative at the face end of the drill body (1) produce a resultant radial force (F), which is radially oriented in a specific angular position relative to the cutting element;
characterised in that
- means for improving the rigidity of the drill body (1) to counter elastic bending under the influence of the aforementioned resultant radial force (F) are provided, these means including the formation of the chip removal space or spaces (14, 15) in the drill body (1) in that each chip removal space (14; 15) is divided into three axially adjacent segments (I, II, III), wherein
- in a first segment (I) adjoining the end face (17) of the drill body (1) towards the cutting edge and including at least one cutting element seat (10; 11), each chip removal space (14; 15) is formed to be essentially linearly or obliquely grooved;
- in an adjoining second segment (II), each chip removal space (14; 15) is formed to be partially helical with a twist (21) of less than 90° relative to the drill body axis (16) over its axial length, the twist in the second partially helical segment (II) being dimensioned such that the primary axis of inertia (0-0) of the geometric moment of inertia in an adjoining third segment (III) points at least approximately in the direction of the resultant radial force (F); and
- in the adjoining third segment (III), each chip removal space (14; 15) is again formed to be essentially linearly grooved.

2. Drilling tool according to Claim 1, characterised in that the angle of inclination (20) in the second partially helical segment (II) lies between approximately 5° and approximately 30°, and is preferably approximately 15°.

3. Drilling tool according to Claim 1 or 2, characterised in that the twist (21) over the axial length in the second partially helical segment (II) amounts to between approximately 10° and approximately 60°, and is preferably approximately 30°.

4. Drilling tool according to one of the preceding claims, characterised in that in the first region (I) at least the side wall (12; 13) containing a cutting element seat (10; 11) in each chip removal space (14, 15) is essentially flat.

5. Drilling tool according to Claim 4, characterised in that in the first region at least one chip removal space (15) is defined by two essentially flat side walls (13, 13a).

6. Drilling tool according to Claim 4 or 5, characterised in that at least in the second partially helical region (II), the side wall (12), defining the chip removal space (14) on the side associated with a radially outer cutting element (7), of the corresponding chip removal space has a strip-like region (12') which is coiled helically beginning at the circumference of the drill body (1).

7. Drilling tool according to one of the preceding claims, characterised in that each chip removal space (14, 15), at least on its side facing the drill body axis, is curved essentially circularly or elliptically in cross-section.

8. Drilling tool according to one of the preceding claims, characterised in that in the second region (II) the side walls defining the respective chip removal space (14, 15) have a radial angle (25, 26) other than zero.

9. Drilling tool according to Claim 8, characterised in that the radial angle is positive.

10. Drilling tool according to Claim 8 or 9 , characterised in that the radial angle is between approximately 4° and approximately 20°, and preferably amounts to approximately 6° to 8°.

11. Drilling tool according to one of the preceding claims, characterised in that in the third segment (III) the side walls defining the respective chip removal space (14, 15) have a radial angle other than zero on at least one side.

12. Drilling tool according to Claim 11, characterised in that the radial angle is positive.

13. Drilling tool according to Claim 11 or 12, characterised in that the radial angle is between approximately 4° and 20°, and preferably amounts to approximately 8°.

14. Drilling tool according to one of the preceding claims, characterised in that a pocket-like recess is formed in a side wall (12, 13) of each cutting element seat (10, 11) in the first segment (I) of the respective chip removal space, and the respective side wall (12; 13) of the chip removal space is substantially located in the same plane as, or is slightly set back from, the top of the associated cutting element (7, 8).

15. Drilling tool according to one of the preceding claims, characterised in that essentially straight coolant ducts (27; 31) are formed in the drill body (1) leading to at least one cutting element (7, 8) and extending over at least part of the length of the chip removal spaces (14, 15).

16. Drilling tool according to Claim 15, characterised in that the respective coolant duct (27; 34) opens at the end face (17) towards the cutting edge of the drill body (1).

17. Drilling tool according to Claim 16, characterised in that in the first segment (I) at least one connecting duct (28) is formed leading from the coolant duct (27) into a chip removal space (14, 15).

18. Drilling tool according to Claim 17, characterised in that the connecting duct (28) is formed as a groove in the end face (17) of the drill body (1).

## Revendications

1. Outil de perçage, en particulier pour des matériaux métalliques, comprenant
- un corps de foret (1) essentiellement cylindrique qui, à une extrémité, côté serrage, comporte une queue de serrage (2) coaxiale et, à son autre extrémité (4), côté tranchant, est muni d'éléments de coupe (7, 8),
- au moins un logement de copeaux (14; 15) en forme de rainure aménagé dans la surface extérieure du corps de foret (1), qui à l'extrémité (4) côté tranchant du corps de foret (1) débouche dans la surface frontale (17) de celui-ci et s'étend sur la longueur du corps de foret jusque dans la région de son extrémité côté serrage,
- au moins un siège (10, 11) pour recevoir au moins un élément de coupe (7; 8) aménagé dans la région du logement de copeaux (14; 15) concerné à l'extrémité (4) côté tranchant du corps de foret (1),
- au moins un élément de coupe (7) qui est fixé sur un siège (10; 11) associé, présente au moins une arête coupante (7a) active sur la face frontale du corps de foret et fait saillie radialement par rapport à la surface extérieure du corps de foret (1) avec un angle d'arête de coupe (7b) extérieur consécutif à une arête de coupe (7a) et auquel est associé le cas échéant au moins un élément de coupe supplémentaire (8) avec une arête de coupe active (8a), qui est située de préférence à l'intérieur du cercle de déplacement de l'angle d'arête de coupe (7b) extérieur mentionné, les efforts de coupe qui agissent sur la ou les arête(s) de coupe active(s) (7a; 7b) sur la face frontale du corps de foret (1) lors de l'enlèvement de copeaux produisant une force radiale (F) résultante qui est orientée radialement dans une certaine position angulaire par rapport à l'élément de coupe,
caractérisé par le fait que
- des moyens pour améliorer la rigidité du corps de foret (1) vis-à-vis de déformations élastiques sous l'influence de la force radiale (F) résultante mentionnée sont prévus, lesdits moyens englobant l'aménagement du ou des logement(s) de copeaux (14; 15) dans le corps de foret (1), chaque logement de copeaux (14; 15) étant subdivisé en trois tronçons (I, II, III) consécutifs dans la direction axiale,
- dans un premier tronçon (I) consécutif à la surface frontale (17) côté tranchant du corps de foret (1) qui contient au moins un siège d'élément de coupe (10; 11), chaque logement de copeaux (14; 15) étant conformé en rainure essentiellement rectiligne ou inclinée,
- dans un deuxième tronçon (II) consécutif au premier, chaque logement de copeaux (14; 15) étant conformé sur sa longueur axiale, partiellement en hélice avec une torsion (21) inférieure à 90° par rapport à l'axe de corps de foret (16), la torsion dans le deuxième tronçon (II) conformé en hélice partielle étant telle que l'axe d'inertie principal (0-0) du moment d'inertie des surfaces, dans un troisième tronçon (III) consécutif, soit orienté au moins approximativement dans la direction de la force radiale (F) résultante et
- dans le troisième tronçon (III) consécutif au précédent chaque logement de copeaux (14; 15) étant conformé de nouveau essentiellement en rainure rectiligne.

2. Outil de perçage selon la revendication 1, caractérisé par le fait que l'angle de pas (20) dans le deuxième tronçon (II) conformé partiellement en hélice est compris entre environ 5° et environ 30°, de préférence est d'environ 15°.

3. Outil de perçage selon la revendication 1 ou 2, caractérisé par le fait que la torsion (21) sur la longueur axiale dans le deuxième tronçon (II) conformé partiellement en hélice est comprise entre environ 10° et environ 60°, de préférence est d'environ 30°.

4. Outil de perçage selon une des revendications précédentes, caractérisé par le fait que dans le premier tronçon (I), au moins la paroi latérale (12; 13) de chaque logement de copeaux (14; 15) qui contient un siège d'élément de coupe (10; 11) est essentiellement plane.

5. Outil de perçage selon la revendication 4, caractérisé par le fait que dans le premier tronçon au moins un logement de copeaux (15) est délimité par deux parois latérales (13, 13a) essentiellement planes.

6. Outil de perçage selon la revendication 4 ou 5, caractérisé par le fait qu'au moins dans le deuxième tronçon (II) conformé partiellement en hélice, la paroi latérale (12) qui délimite le logement de copeaux (14) du côté associé à un élément de coupe (7) disposé radialement à l'extérieur, à partir de la surface extérieure du corps de foret (1), présente une zone en forme de bande (12') qui est enroulée en hélice.

7. Outil de perçage selon une des revendications précédentes, caractérisé par le fait que chaque logement de copeaux (14; 15), au moins du côté tourné vers l'axe du corps de foret, présente en section une courbure essentiellement circulaire ou elliptique.

8. Outil de perçage selon une des revendications précédentes, caractérisé par le fait que dans le deuxième tronçon (II), les parois latérales qui délimitent le logement de copeaux (14; 15) concerné forment un angle radial (25, 26) différent de zéro.

9. Outil de perçage selon une des revendications précédentes, caractérisé par le fait que l'angle radial est positif.

10. Outil de perçage selon la revendication 8 ou 9, caractérisé par le fait que l'angle radial est compris entre environ 4° et environ 20,° de préférence est d'environ 6° à 8°.

11. Outil de perçage selon une des revendications précédentes, caractérisé par le fait que dans le troisième tronçon (III), les parois latérales qui délimitent le logement de copeaux (14; 15) concerné,d'un côté au moins, présentent un angle radial différent de zéro.

12. Outil de perçage selon la revendication 11, caractérisé par le fait que l'angle radial est positif.

13. Outil de perçage selon la revendication 11 ou 12, caractérisé par le fait que l'angle radial est compris entre environ 4° et environ 20,° de préférence est d'environ 8°.

14. Outil de perçage selon une des revendications précédentes, caractérisé par le fait que chaque siège d'élément de coupe (10; 11) est aménagé dans une cavité en forme de poche dans une paroi latérale (12, 13) du premier tronçon (I) du logement de copeaux concerné et que la paroi latérale (12; 13) du logement de copeaux est située sensiblement dans le même plan que la face supérieure de l'élément de coupe (7, 8) associé ou est légèrement en retrait par rapport à celle-ci.

15. Outil de perçage selon une des revendications précédentes, caractérisé par le fait que des canaux à liquide de refroidissement (27; 31) rectilignes qui mènent à au moins un élément de coupe (7, 8) et s'étendent sur une partie au moins de la longueur des logement de copeaux (14, 15) sont aménagés dans le corps de foret (1).

16. Outil de perçage selon la revendication 15, caractérisé par le fait que chaque canal à liquide de refroidissement (27; 34) débouche dans la surface frontale (17) côté tranchant du corps de foret (1).

17. Outil de perçage selon la revendication 16, caractérisé par le fait qu'au moins un canal de piquage (28) qui mène du canal à liquide de refroidissement (27) à un logement de copeaux (14; 15) est aménagé dans le premier tronçon (I).

18. Outil de perçage selon la revendication 17, caractérisé par le fait que le canal de piquage (28) est conformé en rainure dans la face frontale (17) du corps de foret (1).
